# EUROPÄISCHE PATENTSCHRIFT

(11) **EP 2 276 367 B1**
(45) Veröffentlichungstag und Bekanntmachung des Hinweises auf die Patenterteilung: **10.08.2022**
(21) Anmeldenummer: 09719322.1
(22) Anmeldetag: 10.02.2009
(51) Int. Cl.: A44B 18/00, E04F 13/08, F16B 5/07

(54) **VERFAHREN ZUM HERSTELLEN EINES FESTLEGEGEGENSTANDES, INSBESONDERE IN FORM EINES HITZEBESTÄNDIGEN HAFTVERSCHLUSSTEILS**
METHOD FOR PRODUCING A SECURING OBJECT, PARTICULARLY IN THE FORM OF A HEAT-RESISTANT ADHESIVE CLOSURE
PROCÉDÉ DE PRODUCTION D'UN OBJET DE FIXATION, EN PARTICULIER SOUS FORME D'UN ÉLÉMENT DE FERMETURE AUTO-AGRIPPANTE RÉSISTANT À CHAUD

(30) Priorität: 12.03.2008 DE 102008013890
(43) Veröffentlichungstag der Anmeldung: 26.01.2011
(73) Patentinhaber: Gottlieb Binder GmbH & Co. KG, 71088 Holzgerlingen (DE)
(72) Erfinder: POULAKIS, Konstantinos, 71157 Hildrizhausen (DE)
(74) Vertreter: Bartels und Partner, Patentanwälte
(86) Internationale Anmeldenummer: PCT/EP2009/000907
(87) Internationale Veröffentlichungsnummer: WO 2009/112133

(56) Entgegenhaltungen:
- WO-A-98/46417
- DE-A1-102006 015 145
- US-A- 3 494 006
- US-A- 3 921 259

## Beschreibung

Die Erfindung betrifft ein Verfahren zum Herstellen eines Festlegegegenstandes, insbesondere in Form eines hitzebeständigen Haftverschlussteils, mit den Merkmalen im Oberbegriff von Patentanspruch 1.

Durch die EP 1 047 539 B1 ist ein Verfahren zum Herstellen von Festlegegegenständen bekannt, bei dem Festlegeelemente mit einem pilzkopfförmigen Verhakungskopf und einem Fußteil in Form eines Stieles an einer Trägerstruktur angebracht werden. Bei der bekannten Lösung handelt es sich um ein Formverfahren, bei dem der Festlegegenstand mittels Spritzgussmaschinen aus geschmolzenem Polypropylen geformt wird. Haftverschlusssysteme auf Kunststoffbasis, bei denen derartige Festlegegegenstände eingesetzt werden, werden für eine Vielzahl von Anwendungsgebieten vorteilhaft eingesetzt und haben daher weiteste Verbreitung gefunden. Allerdings ist das Einsatzgebiet der Haftverschlusssysteme auf Kunststoffbasis durch die geringe Temperaturstabilität des Kunststoffwerkstoffes eingeschränkt. Um Haftverschlusssysteme auch in solchen Anwendungsfällen einsetzen zu können, bei denen sehr hohe thermische und/oder mechanische Belastungen auftreten, sind durch DE 10 2006 015 145 A1 bereits Festlegesysteme in der Art metallischer Haftverschlüsse bekannt. Diese ermöglichen eine schnelle und einfache Anbringung oder Verbindung von Bauteilen auch unter ungünstigen Bedingungen, sowohl hinsichtlich thermischer als auch mechanischer Belastung, wie dies beispielsweise in Heißzonen von Kraftmaschinen der Fall ist, beispielsweise bei Drittbauteilen, die im Motorraum eines Verbrennungsmotors in der Nähe des Abgassystemes anzubringen sind.

US 3 921 259 offenbart ein Verfahren zum Herstellen eines Festlegegegenstands, insbesondere in Form eines hitzebeständigen Haftverschlussteils, umfassend das Ausbilden und Bereitstellen von metallischen Festlegeelementen mit einem Verhakungskopf und einem Fußteil in Form eines zylindrischen Stieles, das Bereitstellen einer Trägerstruktur. Die Festlegeelemente werden in die Trägerstruktur eingestochen. US 3 921 259 offenbart den Oberbegriff von Anspruch 1.

Aus der US 3 494 006 ist ein Festlegegegenstand mit selbsthaftenden Festlegeelementen bekannt, die jeweils einen Stiel und mindestens einen einstückig daran ausgebildeten Widerhaken aufweisen. Das US-Dokument nennt zum Anbringen der Festlegeelemente an der Festlegefläche mechanisches Einbringen und als Alternative das Einbetten in eine Klebeschicht. Im Hinblick hierauf stellt sich die Erfindung die Aufgabe, ein Verfahren aufzuzeigen, das eine einfache und rationelle Herstellung von Festlegegegenständen in Form eines Haftverschlussteiles ermöglicht, der sich durch eine hohe Belastbarkeit, insbesondere Hitzebeständigkeit auszeichnet. Erfindungsgemäß ist diese Aufgabe durch ein Verfahren gelöst, das die Merkmale des Patentanspruches 1 in seiner Gesamtheit aufweist.

Danach besteht eine wesentliche Besonderheit der Erfindung darin, dass eine Perforation in die Festlegefläche in Form von zylindrischen Bohrungen eingebracht wird, deren Bohrungsdurchmesser dem Schaftdurchmesser des Stiels der Festlegeelemente entspricht, zur Bildung von Sitzen für die Aufnahme der Stiele der Festlegeelemente; und die Stiele der Festlegeelemente in die Perforation der Festlegefläche eingesetzt werden. Das Bestücken der Lochung der Perforation kann mit sehr hohen Produktionsgeschwindigkeiten mittels einer Art Schusseinrichtung erfolgen. Der Werkstoff der Trägerstruktur ist aus einer Vielzahl hitzebeständiger Materialien wählbar, insbesondere kann es sich um ein Metallblech handeln, wenn besonders hohe Hitzebeständigkeit gefordert ist. Die Festlegeelemente selbst sind ebenfalls einfach und rationell herstellbar, beispielsweise durch Ablängen eines Metalldrahtes und Anstauchen der gebildeten Drahtstücke zur Ausbildung des Verhakungskopfes, beispielsweise in Pilzkopfform.

Vorzugsweise werden die Stiele der Festlegeelemente in die Perforation der Festlegefläche nicht nur eingesetzt, sondern derart festgelegt, so dass eine hohe Kraftübertragung zwischen Trägerstruktur und Festlegeelementen erfolgen kann.

Bei Ausführungsbeispielen, bei denen die Trägerstruktur durch einen metallischen Werkstoff gebildet ist, kann die Fixierung in vorteilhafter Weise durch Lötverbindungen erfolgen.

Alternativ kann so vorgegangen werden, dass die Stiele durch Kleben in der Perforation festgelegt werden.

Insbesondere in Fällen, wo die Trägerstruktur aus einem nichtmetallischen, wärmebeständigen Werkstoff gebildet ist, beispielsweise einem Keramikwerkstoff oder einem Karbonmaterial, können die Stiele der Festlegeelemente durch Kleben in der Perforation festgelegt werden.

Zur Bildung der Perforation der Festlegefläche der Trägerstruktur kann so vorgegangen werden, dass ein Bohrungsmuster gebildet wird, bei dem Bohrungen in geradliniger Richtung sowie in der von der Geraden abweichenden Richtung aufeinanderfolgen. Dadurch, dass die eingesetzten Festlegeelemente nicht nur in geraden Linien aufgereiht sind, zeichnen sich so gebildete Haftverschlussteile nicht nur durch eine hohe Haltekraft senkrecht zur Verschlussebene aus, sondern bieten auch eine verstärkte Festlegewirkung gegen Verschieben längs der Verschlussebene.

Ein derartiges Bohrungsmuster kann so ausgebildet werden, dass aufeinanderfolgende Bohrungen entlang einer Wellenlinie eingebracht werden.

Die Ausbildung der Perforation kann mit sehr hohen Produktionsgeschwindigkeiten mittels Hochgeschwindigkeitsbohren erzeugt werden, wobei Vorschub und Positionierung mit hoher Frequenz taktgesteuert sind. Durch Lasertechnik läßt sich ebenfalls eine hohe Produktionsgeschwindigkeit erreichen.

Vorzugsweise werden in die Festlegefläche Bohrungen in Abständen voneinander eingebracht, die etwa das Vierfache des Bohrungsdurchmessers betragen. Bei einem derartigen Bohrungsmuster ergibt sich ein für den Verhakungseingriff besonders gut geeigneter Abstand zwischen den einzelnen Verhakungsköpfen der Festlegeelemente, wenn der Durchmesser der vorzugsweise pilzkopfartigen Verhakungsköpfe etwa das 1,8-fache des Durchmessers des Stieles und damit der Bohrungen beträgt.

Nachstehend ist die Erfindung anhand der Zeichnung im Einzelnen erläutert. Es zeigen:
- Fig. 1: eine gegenüber einer praktischen Ausführungsform etwa um den Faktor 4 vergrößert dargestellte Draufsicht einer Trägerstruktur mit darin ausgebildeter Perforation in Form von in geradlinigen Reihen und Spalten angeordneten Bohrungen, ohne darin eingesetzte Festlegeelemente;
- Fig. 2: einen Querschnitt der Trägerstruktur entsprechend der Schnittlinie II-II von Fig. 1;
- Fig. 3: einen der Fig. 2 entsprechenden, demgegenüber vergrößert dargestellten Schnitt, wobei in die Perforation der Trägerstruktur eingesetzte Festlegeelemente dargestellt sind;
- Fig. 4: eine gegenüber einer praktischen Ausführungsform übertrieben groß dargestellte Seitenansicht eines einzelnen, stielartigen Festlegeelementes; und
- Fig. 5: eine der Fig. 1 entsprechende Draufsicht einer abgewandelten Trägerstruktur mit einer Perforation mit entlang Sinuswellen angeordneten Perforationslöchern.

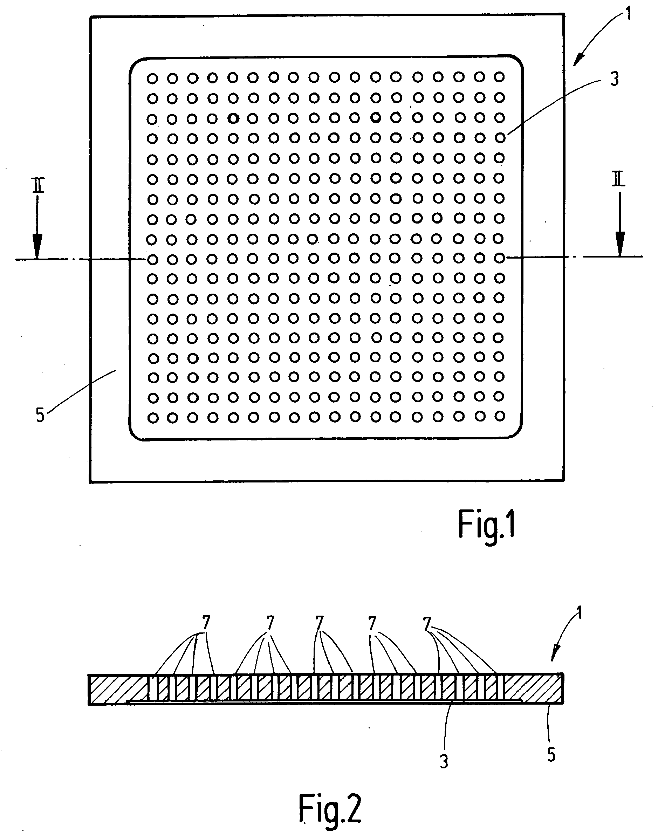

Fig. 1 zeigt in Draufsicht die als Ganzes mit 1 bezeichnete Trägerstruktur für ein Ausführungsbeispiel des Festlegegegenstandes ohne an der Trägerstruktur 1 angebrachte Festlegeelemente. Die Trägerstruktur 1 ist beim gezeigten Beispiel durch eine Metallplatte mit quadratischem Umriss gebildet, deren Kantenlänge bei einer praktischen Ausführungsform 28 mm beträgt. Die in Fig. 1 gezeigte Oberseite der Festlegefläche 3 der Trägerstruktur 1 ist längs ihrer vier Seiten von Randstreifen 5 umgeben, die gegenüber der ebenen Festlegefläche 3 geringfügig erhöht sind, bei der vorstehend erwähnten praktischen Ausführungsform um 0,2 mm, wobei die Materialdicke der Trägerstruktur 1 in den Randstreifen 5 1,7 mm und die Materialstärke innerhalb der Festlegefläche 3 demgemäß 1,5 mm beträgt.

Innerhalb der Festlegefläche 3 befindet sich eine Perforation, die erfindungsgemäß aus zylindrischen Bohrungen 7, die lediglich in Fig. 2 beziffert sind, gebildet ist. Bei dem in Fig. 1 bis 3 gezeigten ersten Ausführungsbeispiel sind die Bohrungen 7 in zu den Randstreifen 5 parallel verlaufenden und daher geradlinigen Reihen und Spalten angeordnet, wobei die Reihen und Spalten jeweils 18 Bohrungen 7 enthalten, so dass die Perforation insgesamt 324 Bohrungen umfasst.

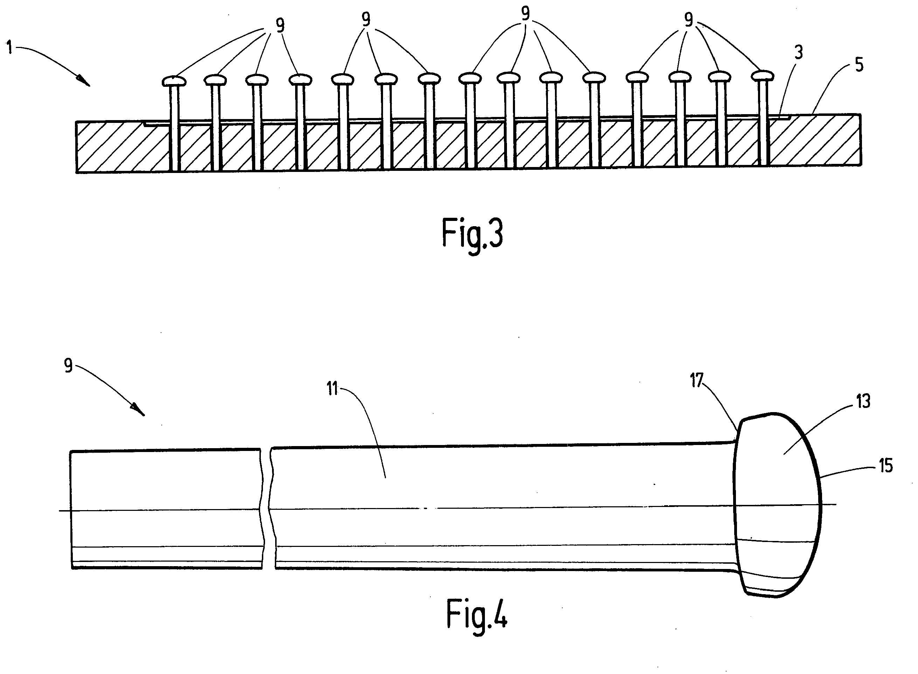

In der Schnittdarstellung von Fig. 3 ist eine Bohrungsreihe sichtbar, die mit Festlegeelementen 9 bestückt ist. Bei diesen handelt es sich um Metallteile, die beim vorliegenden Ausführungsbeispiel aus Kupfer bestehen und deren Formgebung aus der stark vergrößerten Darstellung von Fig. 4 näher ersichtlich ist. Wie gezeigt, weisen die Verhakungselemente 9 ein Fußteil in Form eines zylindrischen Stieles 11 auf, dessen oberes Ende durch einen Verhakungskopf 13 gebildet ist, der pilzkopfartig gestaltet ist, also eine kreisbogenartig gewölbte Kopffläche 15 und einen dazu entgegengesetzten, vom Stiel 11 seitlich auskragenden Verhakungsrand 17 bildet. Bei einer Perforation mit Bohrungen 7, deren Bohrungsdurchmesser bei der Dimensionierung der oben erwähnten praktischen Ausführungsform etwas geringer als 0,3 mm ist, was dem Schaftdurchmesser des Stieles 11 der Verhakungselemente 9 entspricht, kann der Durchmesser des Verhakungskopfes 13 etwa 0,5 mm, d.h. näherungsweise das 1,8-fache des Schaftdurchmessers des Stieles 11 betragen. Derartige Größenverhältnisse ergeben eine gute Verhakungswirkung eines derartigen Festlegegenstandes, wenn bei der Perforation in der Festlegefläche 3, so wie es bei der Dimensionierung der erwähnten Ausführungsform der Fall ist, die Bohrungen in Abständen voneinander angeordnet sind, die etwa das Vierfache des Bohrungsdurchmessers betragen.

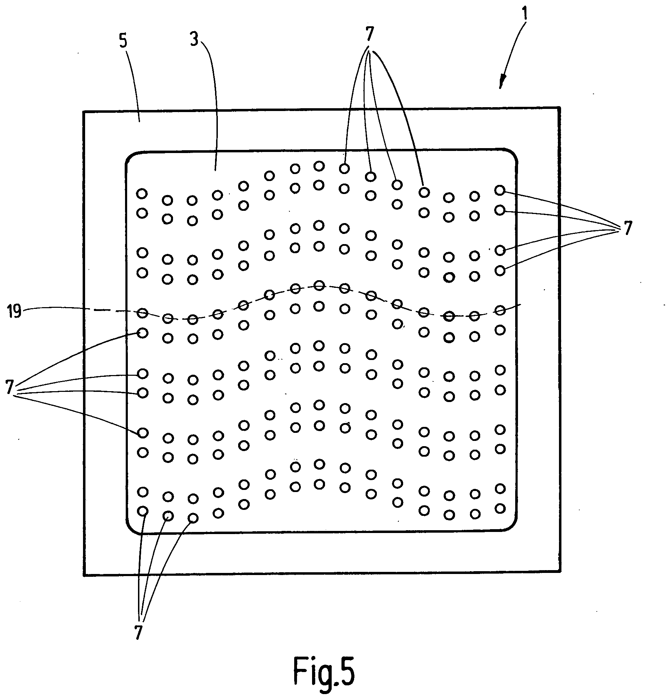

Während beim ersten Ausführungsbeispiel, wie dies in Fig. 1 gezeigt ist, die Perforation durch ein Bohrungsmuster mit Bohrungen 7 in geraden Zeilen und Spalten gebildet ist, zeigt Fig. 5 eine alternative Ausführungsform, bei der in der Festlegefläche 3 der ansonsten gleich wie in Fig. 1 ausgebildeten Trägerstruktur 1 eine Perforation vorgesehen ist, bei der Bohrungen 7, die in Fig. 5 lediglich teilweise beziffert sind, nur in Spalten (in der Zeichnung von Fig. 5 von oben nach unten) geradlinig angeordnet sind, jedoch in Zeilen derart aufeinanderfolgend angeordnet sind, dass sie in einer Sinuswellenform verlaufen, wie dies in Fig. 5 mit einer gestrichelten Linie 19 angedeutet ist. Bei ansonsten in gleicher Weise, wie dies beim erst beschriebenen Beispiel der Fall ist, mit Festlegeelementen 9 bestückter Festlegefläche 3 ergibt sich dadurch ein Verhakungsmuster, bei dem die Verhakungswirkung gegen relative Verschiebebewegungen entlang der Trägerstruktur 1 gegenüber dem erstbeschriebenen Ausführungsbeispiel erhöht ist.

Wenn es sich bei der Trägerstruktur 1 um ein metallisches Bauteil handelt, können die Festlegeelemente 9 mit Vorteil durch Lötverbindungen in den Bohrungen 7 gesichert werden. Bei Trägerstrukturen 1, die aus nicht metallischen, hitzebeständigen Materialien gebildet sind, können Klebeverbindungen vorgesehen sein. Hierbei kann so vorgegangen werden, dass die Festlegefläche 3 vor dem Bestücken mit den Festlegeelementen 9 mit einem Klebstoffauftrag beschichtet wird und die Stiele 11 der Festlegeelemente 9 durch die Klebstoffschicht hindurch in die Bohrungen 7 eingeschossen werden. Gegebenenfalls kann danach ein entsprechend gewähltes Klebstoffmaterial chemisch oder thermisch aktiviert werden. Als nicht metallische hitzebeständige Werkstoffe können Keramikteile oder Karbonteile vorgesehen sein, wobei im Falle von Keramikwerkstoffen die Perforation vorzugsweise vor einer Sinterung durchgeführt wird, wobei die Perforation durch Bohren gebildet wird. Je nach Werkstoff der Trägerstruktur 1 kann die Perforation durch Bohren mit einem Laser ausgebildet werden.

Anstelle einer Trägerstruktur 1, die entsprechend der gezeigten Ausführungsbeispiele eine ebenflächige Festlegefläche 3 aufweist und eine quadratische Umrissform besitzt, könnte die Trägerstruktur 1 in anderer Umrissform, etwa streifen- oder bandförmig oder abgerundet, und mit einer Festlegefläche 3 ausgebildet sein, die nicht ebenflächig, sondern in Anpassung an die Flächenform einer betreffenden Anbringstruktur, aus der Ebene ausgebogen ist.

Anstelle der gezeigten Durchgangsbohrungen könnten auch am Grund geschlossene Vertiefungen, wie Sackbohrungen, vorgesehen sein.

## Patentansprüche

1. Verfahren zum Herstellen eines Festlegegegenstandes, insbesondere in Form eines hitzebeständigen Haftverschlussteils, umfassend:
- das Ausbilden und Bereitstellen von metallischen Festlegeelementen (9) mit einem Verhakungskopf (13) und einem Fußteil in Form eines zylindrischen Stieles (11); und
- das Bereitstellen einer Trägerstruktur (1) mit einer Festlegefläche (3),
**gekennzeichnet durch**
- das Einbringen einer Perforation (7) in die Festlegefläche (3) in Form von zylindrischen Bohrungen (7), deren Bohrungsdurchmesser dem Schaftdurchmesser des Stiels (11) der Festlegeelemente (9) entspricht, zur Bildung von Sitzen für die Aufnahme der Stiele (11) der Festlegeelemente (9); und
- das Einsetzen der Stiele (11) der Festlegeelemente (9) in die Perforation (7) der Festlegefläche (3).

2. Verfahren nach Anspruch 1, **dadurch gekennzeichnet, dass** die Stiele (11) der Festlegeelemente (9) in der Perforation (7) der Festlegefläche (3) festgelegt werden.

3. Verfahren nach Anspruch 2, **dadurch gekennzeichnet, dass** die Trägerstruktur (1) durch einen metallischen Werkstoff gebildet und die Stiele (11) durch Lötverbindungen in der Perforation (7) festgelegt werden.

4. Verfahren nach Anspruch 2, **dadurch gekennzeichnet, dass** die Stiele (11) durch Kleben in der Perforation (7) festgelegt werden.

5. Verfahren nach einem der Ansprüche 1 bis 4, **dadurch gekennzeichnet, dass** die Perforation (7) in der Festlegefläche (3) der Trägerstruktur (1) durch ein Bohrungsmuster gebildet wird, bei dem Bohrungen (7) in geradliniger Richtung sowie in von der Geraden abweichender Richtung aufeinanderfolgen.

6. Verfahren nach Anspruch 5, **dadurch gekennzeichnet, dass** aufeinanderfolgende Bohrungen (7) entlang einer Wellenlinie (19) eingebracht werden.

7. Verfahren nach einem der Ansprüche 1 bis 6, **dadurch gekennzeichnet, dass** in die Festlegefläche (3) Bohrungen (7) in Abständen voneinander eingebracht werden, die etwa das Vierfache des Bohrungsdurchmessers betragen.

8. Verfahren nach einem der Ansprüche 1 bis 7, **dadurch gekennzeichnet, dass** die Festlegeelemente (9) mit pilzkopfartigen Verhakungsköpfen ausgebildet werden, deren Durchmesser etwa das 1,8-fache des Durchmessers des Stieles (11) beträgt.

## Claims

1. Method for manufacturing a fastening object, particularly in the form of a heat-resistant adhesive closure part, entailing:
- forming and providing metallic fastening elements (9) with an interlocking head (13) and a base part in the form of a cylindrical shank (11); and
- providing a support structure (1) with a fastening surface (3),
**characterised by**
- incorporating a perforation (7) in the fastening surface (3) in the form of cylindrical holes (7), the diameter of said holes corresponding to the diameter of the shaft of the shank (11) of the fastening elements (9), to form seats to receive the shanks (11) of the fastening elements (9); and
- inserting the shanks (11) of the fastening elements (9) in the perforation (7) of the fastening surface (3).

2. Method according to claim 1, **characterised in that** the shanks (11) of the fastening elements (9) are fastened in the perforation (7) of the fastening surface (3).

3. Method according to claim 2, **characterised in that** the support structure (1) is formed by a metallic material and the shanks (11) are fastened in the perforation (7) by soldered joints.

4. Method according to claim 2, **characterised in that** the shanks (11) are fastened in the perforation (7) by adhesion.

5. Method according to any one of claims 1 to 4, **characterised in that** the perforation (7) in the fastening surface (3) of the support structure (1) is formed by a hole pattern in which holes (7) are arranged consecutively in a rectilinear direction and in a non-rectilinear direction.

6. Method according to claim 5, **characterised in that** consecutive holes (7) are provided along a wavy line (19).

7. Method according to any one of claims 1 to 6, **characterised in that** holes (7) are provided at intervals from one another in the fastening surface (3), said intervals being approximately four times the diameter of the hole.

8. Method according to any one of claims 1 to 7, **characterised in that** the fastening elements (9) are formed with mushroom-like interlocking heads, the diameter of which is approximately 1.8 times the diameter of the shank (11).

## Revendications

1. Procédé de fabrication d'un objet de fixation, en particulier sous la forme d'une fermeture auto-agrippante résistante à la chaleur, comprenant :
- la constitution et la mise à disposition d'éléments (9) métalliques de fixation ayant une tête (13) d'accrochage et une partie de pied sous la forme d'une tige (11) cylindrique ; et
- la mise à disposition d'une structure (1) de support ayant une surface (3) de fixation,
**caractérisé par**
- la production d'une partie perforée (7) dans la surface (3) de fixation sous la forme de trous (7) cylindriques, dont le diamètre de trou correspond au diamètre de fût de la tige (11) des éléments (9) de fixation, pour la formation de sièges de réception des tiges (11) des éléments (9) de fixation ; et
- l'insertion des tiges (11) des éléments (9) de fixation dans la partie perforée (7) de la surface (3) de fixation.

2. Procédé suivant la revendication 1, **caractérisé en ce que** l'on fixe les tiges (11) des éléments (9) de fixation dans la partie perforée (7) de la surface (3) de fixation.

3. Procédé suivant la revendication 2, **caractérisé en ce que** l'on forme la structure (1) de support par un matériau métallique et on fixe les tiges (11) par des brasages dans la partie perforée (7).

4. Procédé suivant la revendication 2, **caractérisé en ce que** l'on fixe les tiges (11) par collage dans la partie perforée (7) .

5. Procédé suivant l'une des revendications 1 à 4, **caractérisé en ce que** l'on forme la partie perforée (7) dans la surface (3) de fixation de la structure (1) de support par un motif de trou, dans lequel des trous (7) se suivent en ligne droite ainsi que dans une direction s'écartant de droites.

6. Procédé suivant la revendication 5, **caractérisé en ce que** l'on produit des trous (7) successifs le long d'une ligne (19) ondulée.

7. Procédé suivant l'une des revendications 1 à 6, **caractérisé en ce que** l'on produit, dans la surface (3) de fixation, des trous (7) à des distances les uns des autres, qui sont à peu près égales au quadruple du diamètre d'un trou.

8. Procédé suivant l'une des revendications 1 à 7, **caractérisé en ce que** l'on constitue les éléments (9) de fixation en leur donnant des têtes d'accrochage en forme de tête de champignon, dont le diamètre est égal à environ 1,8 fois le diamètre de la tige (11).
